# EUROPÄISCHE PATENTSCHRIFT

(11) **EP 4 297 967 B1**
(45) Veröffentlichungstag und Bekanntmachung des Hinweises auf die Patenterteilung: **25.11.2026**
(21) Anmeldenummer: 22708405.0
(22) Anmeldetag: 03.02.2022
(51) Int. Cl.: B32B 17/10, B60J 1/02, G02B 27/01

(54) **PROJEKTIONSANORDNUNG MIT EINER VERBUNDSCHEIBE UND P-POLARISIERTER STRAHLUNG**
PROJECTION ASSEMBLY WITH A COMPOSITE PANE AND P-POLARIZED RADIATION
DISPOSITIF DE PROJECTION AVEC UNE VITRE COMPOSITE ET RAYONNEMENT P-POLARISÉ

(30) Priorität: 26.02.2021 EP 21159447
(43) Veröffentlichungstag der Anmeldung: 03.01.2024
(73) Patentinhaber: Saint-Gobain Sekurit France, 60150 Thourotte (FR)
(72) Erfinder: HAGEMANN, Jan-Hendrik, 52064 Aachen (DE); SCHULZ, Valentin, 52382 Niederzier (DE); GOMER, Andreas, 50170 Kerpen (DE)
(74) Vertreter: Obermair, Christian Egbert
(86) Internationale Anmeldenummer: PCT/EP2022/052515
(87) Internationale Veröffentlichungsnummer: WO 2022/179817

(56) Entgegenhaltungen:
- DE-A1- 102009 020 824

## Beschreibung

Die Erfindung betrifft eine Projektionsanordnung, ein Verfahren zu deren Herstellung und deren Verwendung.

Head-Up-Displays werden heutzutage häufig in Fahrzeugen und Flugzeugen eingesetzt. Die Funktionsweise eines Head-Up-Displays verläuft hierbei über die Verwendung einer bildgebenden Einheit, die mittels eines Optikmoduls und einer Projektionsfläche ein Bild projiziert, das vom Fahrer als virtuelles Bild wahrgenommen wird. Wenn dieses Bild beispielsweise über die Fahrzeug-Windschutzscheibe als Projektionsfläche reflektiert wird, können wichtige Informationen für den Nutzer dargestellt werden, die die Verkehrssicherheit wesentlich verbessern.

Üblicherweise bestehen Fahrzeug-Windschutzscheiben aus zwei Glasscheiben, welche über mindestens eine thermoplastische Folie miteinander laminiert sind. Bei dem vorstehend beschriebenen Head-Up-Display tritt das Problem auf, dass das Projektorbild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Dieses Problem wird gemeinhin dadurch gelöst, dass die reflektierenden Oberflächen mit einem gezielt gewählten Winkel zueinander angeordnet werden, so dass Hauptbild und Nebenbild überlagert werden, wodurch das Nebenbild nicht mehr störend auffällt.

Die Strahlung des Head-Up-Display-Projektors ist typischerweise im Wesentlichen s-polarisiert aufgrund der besseren Reflexionscharakteristik der Windschutzscheibe im Vergleich zur p-Polarisation. Trägt der Fahrer jedoch eine polarisationsselektive Sonnenbrille, welche lediglich p-polarisiertes Licht transmittiert, so kann er das HUD-Bild kaum oder gar nicht wahrnehmen. Es besteht daher Bedarf an HUD-Projektionsanordnungen, welche mit polarisationsselektiven Sonnenbrillen kompatibel sind. Eine Lösung des Problems in diesem Zusammenhang ist daher die Anwendung von Projektionsanordnungen, welche p-polarisiertes Licht einsetzen.

Die DE 102014220189A1 offenbart eine Head-Up-Display-Projektionsanordnung, welche mit p-polarisierter Strahlung betrieben wird, um ein Head-Up-Display-Bild zu erzeugen. Da der Einstrahlwinkel typischerweise nahe dem Brewsterwinkel liegt und p-polarisierte Strahlung daher nur in geringem Maße von den Glasoberflächen reflektiert wird, weist die Windschutzscheibe eine reflektierende Struktur auf, die p-polarisierte Strahlung in Richtung des Fahrers reflektieren kann. Als reflektierende Struktur wird eine einzelne metallische Schicht vorgeschlagen mit einer Dicke von 5 nm bis 9 nm, beispielsweise aus Silber oder Aluminium, die auf der dem Innenraum des PKWs abgewandten Außenseite der Innenscheibe aufgebracht ist.

In der US 2004/0135742A1 ist ebenfalls eine Head-Up-Display-Projektionsanordnung offenbart, welche mit p-polarisierter Strahlung betrieben wird, um ein Head-Up-Display-Bild zu erzeugen, und eine reflektierende Struktur aufweist, die p-polarisierte Strahlung in Richtung des Fahrers reflektieren kann. Als reflektierende Struktur werden die in der WO 96/19347A3 offenbarten mehrlagigen Polymerschichten vorgeschlagen.

Bei der Auslegung eines Displays, das auf der Head-Up-Display-Technologie basiert, muss weiterhin dafür Sorge getragen werden, dass der Projektor eine entsprechend große Leistung hat, so dass das projizierte Bild, insbesondere bei Einfall von Sonnenlicht, eine ausreichende Helligkeit aufweist und vom Betrachter gut erkennbar ist. Dies erfordert eine gewisse Größe des Projektors und geht mit einem entsprechenden Stromverbrauch einher.

Die unveröffentlichten europäischen Anmeldungen EP20200006.3 und EP20200009.7 zeigen den Einsatz eines Maskierungsstreifens im Randbereich der Windschutzscheibe mit einem vor dem Maskierungsstreifen angeordneten transparenten Element, welches auf das Element projizierte Bild in den Fahrzeuginnenraum reflektiert. Aufgrund des lichtundurchlässigen Hintergrundes kann das Bild mit einem höheren Kontrast wahrgenommen werden.

In der DE102009020824A1 ist eine Windschutzscheibe mit einem virtuellen Bildsystem offenbart. Die Bildanzeigevorrichtung ist hierbei auf einen reflektierenden Bereich gerichtet, welche entweder selbst durch eine lichtundurchlässige, reflektierende Schicht ausgebildet ist oder vor einem lichtundurchlässigen Hintergrund angeordnet ist. Die reflektierende Schicht ist auf einer dem Fahrzeuginnenraum zugewandten Fläche der Innenscheibe angeordnet. Hierdurch wird das reflektierte Bild mit einem hohen Kontrast erkennbar. Allerdings ist die reflektierende Schicht vor äußeren schädlichen Einflüssen nicht geschützt.

Entsprechend der beschriebenen Probleme besteht die Aufgabe der vorliegenden Erfindung darin, eine verbesserte Projektionsanordnung zur Verfügung zu stellen, mit dem diese Nachteile vermieden werden können. So wäre es wünschenswert, über eine Projektionsanordnung, die auf der Head-Up-Display-Technologie basiert, zu verfügen, bei dem keine unerwünschten Nebenbilder auftreten und dessen Anordnung bei guter Erkennbarkeit mit ausreichender Helligkeit und Kontrast der angezeigten Bildinformationen relativ einfach zu bewerkstelligen ist. Zudem soll das zur Lichtreflexion vorgesehene Element möglichst vor äußeren Einflüssen geschützt sein, der Energieverbrauch relativ gering sein und die Projektionsanordnung auch mit Sonnenbrillen mit Polarisationsgläsern erkennbar sein. Des Weiteren soll die Projektionsanordnung einfach und kostengünstig herstellbar sein.

Diese und weitere Aufgaben der vorliegenden Erfindung werden erfindungsgemäß durch eine Projektionsanordnung gemäß der unabhängigen Ansprüche 1, 14 und 15 gelöst. Bevorzugte Ausführungsformen gehen aus den Unteransprüchen hervor.

Erfindungsgemäß ist eine Projektionsanordnung beschrieben. Die Projektionsanordnung umfasst eine Verbundscheibe und eine an die Verbundscheibe angeordnete Bildanzeigevorrichtung. Die Verbundscheibe umfasst eine transparente Außenscheibe, eine transparente Innenscheibe, eine thermoplastische Zwischenschicht und eine Reflexionsschicht (Spiegelschicht). Die Außenscheibe weist eine von der thermoplastischen Zwischenschicht abgewandte Außenseite und eine der thermoplastischen Zwischenschicht zugewandte Innenseite auf und die Innenscheibe weist eine der thermoplastischen Zwischenschicht zugewandte Außenseite und eine von der thermoplastischen Zwischenschicht abgewandte Innenseite auf. Vorzugsweise dient die Verbundscheibe als Fahrzeug-Windschutzscheibe.

Die Reflexionsschicht ist zwischen der Außenscheibe und der Innenscheibe angeordnet, wobei "zwischen" sowohl innerhalb der thermoplastischen Zwischenschicht bedeuten kann als auch in direktem räumlichen Kontakt auf der Innenseite der Außenscheibe und auf der Außenseite der Innenscheibe. Die Reflexionsschicht ist zum Reflektieren von p-polarisiertem sichtbarem Licht geeignet ausgebildet. Die Reflexionsschicht ist selbst opak oder in Durchsicht durch die Verbundscheibe ausgehend von der Innenseite der Innenscheibe räumlich vor einem opaken Hintergrund angeordnet. Der opake Hintergrund kann in diesem Zusammenhang auf der Außenseite oder Innenseite der Außenscheibe oder innerhalb der thermoplastischen Zwischenschicht angeordnet sein.

Natürlich kann die Reflexionsschicht auch selbst opak sein und trotzdem in Durchsicht durch die Innenscheibe räumlich vor dem opaken Hintergrund angeordnet sein. Im Sinne der Erfindung ist der Bereich der Verbundscheibe opak, in dem die Reflexionsschicht angeordnet ist. Ist die Reflexionsschicht vor dem opaken Hintergrund angeordnet, so ist sie vorzugsweise transparent.

Die vorliegende Erfindung beruht auf der Erkenntnis, dass die Reflexionsschicht in Überdeckung zu dem mindestens einen opaken Hintergrund eine gute Bilddarstellung mit hohem Kontrast zum opaken Hintergrund ermöglicht, so dass sie hell erscheint und damit auch ausgezeichnet erkennbar ist. Dies ermöglicht in vorteilhafter Weise eine Reduktion der Leistung der Bildanzeigevorrichtung und somit einen verminderten Energieverbrauch. Dies ist ein großer Vorteil der Erfindung.

Der Ausdruck "in Durchsicht durch die Verbundscheibe" bedeutet, dass durch die Verbundscheibe geblickt wird, ausgehend von der Innenseite der Innenscheibe. Im Sinne der vorliegenden Erfindung bedeutet "räumlich vor", dass die Reflexionsschicht räumlich weiter entfernt von der Außenseite der Außenscheibe angeordnet ist als zumindest der opake Hintergrund. Die Reflexionsschicht kann dabei direkt auf dem opaken Hintergrund aufgebracht sein. Die Reflexionsschicht ist aber unabhängig davon, ob sie direkt auf dem opaken Hintergrund aufgebracht ist oder nicht, in Durchsicht durch die Verbundscheibe immer in vollständiger Überlappung mit dem opaken Hintergrund. Anders ausgedrückt befindet sich die Reflexionsschicht in Durchsicht durch die Verbundscheibe, beginnend mit der Innenseite der Innenscheibe, somit in Überlappung mit dem opaken Hintergrund.

Die Bildanzeigevorrichtung erzeugt ein p-polarisiertes Licht, welches in die Verbundscheibe an der Innenseite der Innenscheibe eintritt und zumindest teilweise durch die Innenscheibe transmittiert. Das p-polarisierte Licht wird gezielt auf die Reflexionsschicht projiziert (also gestrahlt). Das auf die Reflexionsschicht auftreffende p-polarisierte Licht wird zumindest teilweise reflektiert und verlässt die Verbundscheibe an der Innenseite der Innenscheibe. Das von der Bildanzeigevorrichtung erzeugte Licht ist sichtbares Licht, also Licht in einem Wellenlängenbereich von 380 nm bis 780 nm.

Die Strahlung der Bildanzeigevorrichtung trifft vorzugsweise mit einem Einfallswinkel von 45° bis 75°, besonders bevorzugt von 55° bis 65° und insbesondere mit 57° auf die Verbundscheibe im Bereich der Reflexionsschicht. Der Einfallswinkel ist der Winkel zwischen dem Einfallsvektor der Strahlung der Bildanzeigevorrichtung und der Flächennormale im geometrischen Zentrum der Reflexionsschicht. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird die emittierte p-polarisierte Strahlung von der Bildanzeigevorrichtung von den Scheibenoberflächen kaum reflektiert.

Mit dem Begriff p-polarisiertes Licht ist Licht aus dem sichtbaren Spektralbereich gemeint, dass mehrheitlich aus Licht besteht, welches eine p-Polarisation aufweist. Das p-polarisierte Licht hat vorzugsweise einen Lichtanteil mit p-Polarisation von ≥ 50 %, bevorzugt von ≥ 70 % und besonders bevorzugt von ≥ 90 % und insbesondere von etwa 100%.

Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt.

Anders ausgedrückt die Polarisation, also insbesondere der Anteil an p- und s-polarisierter Strahlung, wird an einem Punkt des von der Bildanzeigevorrichtung bestrahlten Bereichs bestimmt, bevorzugt im geometrischen Zentrum des bestrahlten Bereichs. Da Verbundscheiben gekrümmt sein können (beispielweise, wenn sie als Windschutzscheibe ausgebildet sind), was Auswirkungen auf die Einfallsebene der Bildanzeigevorrichtung-Strahlung hat, können in den übrigen Bereichen leicht davon abweichende Polarisationsanteile auftreten, was aus physikalischen Gründen unvermeidlich ist.

Der opake Hintergrund ist vorzugsweise ein opaker Maskierungsstreifen. Der Maskierungsstreifen ist bevorzugt eine Beschichtung aus einer oder mehreren Schichten. Alternativ kann er aber auch ein in die Verbundscheibe eingelegtes, opakes Element sein, beispielsweise eine Folie.

Gemäß einer bevorzugten Ausgestaltung der Verbundscheibe besteht der Maskierungsstreifen aus einer Einzelschicht. Dies hat den Vorteil einer besonders einfachen und kostengünstigen Fertigung der Verbundscheibe, da nur eine einzige Schicht für den Maskierungsstreifen ausgebildet werden muss.

Er kann zusätzlich zu der im Sinne der Erfindung beschriebenen Wirkweise als Maskierung von im verbauten Zustand ansonsten durch die Scheibe erkennbaren Strukturen dienen. Insbesondere bei einer Windschutzscheibe dient der Maskierungsstreifen zum Maskieren einer Kleberaupe zum Einkleben der Windschutzscheibe in eine Fahrzeugkarosserie. Das bedeutet, er verhindert die Sicht auf die in aller Regel unregelmäßig aufgetragene Kleberaupe nach außen, so dass ein harmonischer Gesamteindruck der Windschutzscheibe entsteht. Andererseits dient der Maskierungsstreifen als UV-Schutz für das verwendete Klebematerial. Dauernde Bestrahlung mit UV-Licht schadet dem Klebematerial und würde die Verbindung der Scheibe mit der Fahrzeugkarossiere im Laufe der Zeit lösen. Bei Scheiben mit einer elektrisch steuerbaren Funktionsschicht kann der Maskierungsstreifen beispielsweise auch zum Abdecken von Sammelleitern und/oder Anschlusselementen dienen.

Der Maskierungsstreifen wird bevorzugt auf die Außenscheibe aufgedruckt, insbesondere im Siebdruckverfahren. Dabei wird die Druckfarbe durch ein feinmaschiges Gewebe hindurch auf die Glasscheibe gedruckt. Die Druckfarbe wird dabei beispielsweise mit einer Gummirakel durch das Gewebe hindurchgepresst. Das Gewebe weist Bereiche auf, welche für die Druckfarbe durchlässig sind, neben Bereichen, welche für die Druckfarbe undurchlässig sind, wodurch die geometrische Form des Drucks festgelegt wird. Das Gewebe fungiert somit als Schablone für den Druck. Die Druckfarbe enthält mindestens ein Pigment und Glasfritten, suspendiert in einer flüssigen Phase (Lösungsmittel), beispielsweise Wasser oder organische Lösungsmittel wie Alkohole. Das Pigment ist typischerweise ein Schwarzpigment, beispielsweise Pigmentruß (*Carbon Black*), Anilinschwarz, Beinschwarz, Eisenoxidschwarz, Spinellschwarz und/oder Graphit.

Nach dem Aufdrucken der Druckfarbe wird die Glasscheibe einer Temperaturbehandlung unterzogen, wobei die flüssige Phase durch Verdampfen ausgetrieben wird und die Glasfritten aufgeschmolzen werden und sich dauerhaft mit der Glasoberfläche verbinden. Die Temperaturbehandlung wird typischerweise bei Temperaturen im Bereich von 450°C bis 700°C durchgeführt. Als Maskierungsstreifen verbleibt das Pigment in der durch die aufgeschmolzene Glasfritte gebildeten Glasmatrix. Der Maskierungsstreifen weist bevorzugt eine Dicke von 5 µm bis 50 µm auf, besonders bevorzugt von 8 µm bis 25 µm.

Alternativ ist der Maskierungsstreifen eine gefärbte oder pigmentierte, bevorzugt schwarzpigmentierte, thermoplastische Verbundfolie, die vorzugsweise auf Basis von Polyvinylbutyral (PVB), Ethylvinylacetat (EVA) oder Polyethylenterephthalat (PET), bevorzugt PVB, ausgebildet ist. Die Färbung oder Pigmentierung der Verbundfolie ist dabei frei wählbar, bevorzugt aber schwarz. Die gefärbte oder pigmentierte Verbundfolie ist vorzugsweise zwischen der Außenscheibe und Innenscheibe angeordnet, allerdings ist sie nicht auf der Außenseite der Innenscheibe angeordnet. Die gefärbte oder pigmentierte thermoplastische Verbundfolie weist bevorzugt eine Dicke von 0,25 mm bis 1 mm auf. Vorzugsweise erstreckt sich die gefärbte oder pigmentierte Verbundfolie über maximal 50 % und besonders bevorzugt maximal 30 % der Fläche der Verbundscheibe. Um Dickenunterschiede in der Verbundscheibe zu vermeiden, ist vorzugsweise eine transparente weitere thermoplastische Verbundfolie zwischen der Außenscheibe und der Innenscheibe angeordnet, welche sich über mindestens 50 %, bevorzugt mindestens 30 % der Fläche der Verbundscheibe erstreckt. Die gefärbte oder pigmentierte Verbundfolie ist in der Flächenebene der Verbundscheibe von der transparenten thermoplastischen Verbundscheibe versetzt angeordnet, sodass sich diese nicht überlappten oder decken.

Der Maskierungsstreifen kann auch eine bereichsweise pigmentierte oder gefärbte thermoplastische Verbundfolie sein. In diesem Fall ist die Reflexionsschicht räumlich vor einem dem pigmentierten oder gefärbten Bereich der thermoplastischen Verbundfolie angeordnet. Die Pigmentierung oder Färbung der Verbundfolie erstreckt sich vorzugsweise über einen Bereich von maximal 50 % und besonders bevorzugt maximal 30 % der Fläche der Verbundscheibe. Der restliche Teil der bereichsweise pigmentierten oder gefärbten thermoplastischen Verbundfolie ist transparent, also ohne Pigmentierung oder Färbung ausgebildet. Die bereichsweise pigmentierte oder gefärbte thermoplastische Verbundfolie erstreckt sich vorzugsweise über die gesamte Fläche der Verbundscheibe. Die Ausführung des Maskierungsstreifens als pigmentierte oder gefärbte thermoplastische Verbundfolie oder als bereichsweise pigmentierte oder gefärbte thermoplastische Verbundfolie vereinfacht die Herstellung der Verbundscheibe und verbessert ihre Stabilität. Es ist sehr vorteilhaft, wenn die Außenscheibe oder die Innenscheibe zuvor nicht beschichtet werden müssen, um einen opaken Hintergrund zu erzeugen, da dies die Stabilität der Verbundscheibe und die Prozesseffizienz beeinträchtigen kann.

Die Außenscheibe und Innenscheibe enthalten oder bestehen bevorzugt aus Glas, besonders bevorzugt Flachglas, Floatglas, Quarzglas, Borosilikatglas, Kalk-Natron-Glas, Alumino-Silikat-Glas, oder klaren Kunststoffen, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Die Außenscheibe und Innenscheibe können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der einzelnen Scheiben (Außenscheibe und Innenscheibe) kann breit variieren und den Erfordernissen des Einzelfalls angepasst werden. Vorzugsweise werden Scheiben mit den Standardstärken von 0,5 mm bis 5 mm und bevorzugt von 1,0 mm bis 2,5 mm verwendet. Die Größe der Scheiben kann breit variieren und richtet sich nach der Verwendung.

Die Verbundscheibe kann eine beliebige dreidimensionale Form aufweisen. Vorzugsweise haben die Außenscheibe und Innenscheibe keine Schattenzonen, so dass sie beispielsweise durch Kathodenzerstäubung beschichtet werden können. Bevorzugt sind die Außenscheibe und Innenscheibe plan oder leicht oder stark in eine Richtung oder in mehrere Richtungen des Raumes gebogen.

Im Sinne der vorliegenden Erfindung bedeutet "transparent", dass die Gesamttransmission der Verbundscheibe den gesetzlichen Bestimmungen für Windschutzscheiben (konkret den Richtlinien der europäischen Union entsprechend ECE-R43) entspricht und für sichtbares Licht bevorzugt eine Durchlässigkeit von mehr als 50% und insbesondere von mehr als 60%, beispielsweise mehr als 70%, aufweist. Mit "transparenter Innenscheibe" und "transparenter Außenscheibe" ist somit gemeint, dass die Innenscheibe und die Außenscheibe derart transparent sind, dass die Durchsicht durch einen Durchsichtbereich der Verbundscheibe die gesetzlichen Bestimmungen für Windschutzscheiben erfüllt sind. Entsprechend bedeutet "opak" eine Lichttransmission von weniger als 10 %, bevorzugt weniger als 5 % und insbesondere 0%.

Bevorzugt beträgt der Lichttransmissionsgrad der transparenten Außenscheibe und der transparenten Innenscheibe mindestens 55 %, besonders bevorzugt mindestens 60 % und insbesondere mindestens 70 %.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Die thermoplastische Zwischenschicht enthält oder besteht aus mindestens einem thermoplastischen Kunststoff, bevorzugt Polyvinylbutyral (PVB), Ethylenvinylacetat (EVA) und/oder Polyurethan (PU) oder Copolymere oder Derivate davon, gegebenenfalls in Kombination mit Polyethylenterephthalat (PET). Die thermoplastische Zwischenschicht kann aber auch beispielsweise Polypropylen (PP), Polyacrylat, Polyethylen (PE), Polycarbonat (PC), Polymethylmetacrylat, Polyvinylchlorid, Polyacetatharz, Gießharz, Acrylat, fluorinierte Ethylen-Propylen, Polyvinylfluorid und/oder Ethylen-Tetrafluorethylen, oder ein Copolymer oder Gemisch davon enthalten.

Die thermoplastische Zwischenschicht ist bevorzugt als mindestens eine thermoplastische Verbundfolie ausgebildet und enthält oder besteht aus Polyvinylbutyral (PVB), besonders bevorzugt aus Polyvinylbutyral (PVB) und dem Fachmann bekannte Additive wie beispielsweise Weichmacher. Bevorzugt enthält die thermoplastische Zwischenschicht mindestens einen Weichmacher.

Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykole. Besonders bevorzugt werden als Weichmacher 3G7, 3G8 oder 4G7 eingesetzt, wobei die erste Ziffer die Anzahl der Ethlenglykoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C4H9CH (CH2CH3) CO (OCH2CH2)3O2CCH (CH2CH3) C4H9.

Bevorzugt enthält die thermoplastische Zwischenschicht auf Basis von PVB mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 35 Gew.-% eines Weichmachers. Der Weichmacher enthält oder besteht beispielsweise aus Triethylenglykol-bis-(2-ethylhexanoat).

Die thermoplastische Zwischenschicht kann durch eine einzelne Folie ausgebildet sein oder auch durch mehr als eine Folie. Die thermoplastische Zwischenschicht kann durch eine oder mehrere übereinander angeordnete thermoplastische Folien ausgebildet werden, wobei die Dicke der thermoplastischen Zwischenschicht bevorzugt von 0,25 mm bis 1 mm beträgt, typischerweise 0,38 mm oder 0,76 mm.

Die thermoplastische Zwischenschicht kann auch eine funktionale thermoplastische Zwischenschicht sein, insbesondere eine Zwischenschicht mit akustisch dämpfenden Eigenschaften, eine Infrarotstrahlung reflektierende Zwischenschicht, eine Infrarotstrahlung absorbierende Zwischenschicht und/oder eine UV-Strahlung absorbierende Zwischenschicht. So kann die thermoplastische Zwischenschicht beispielsweise auch eine Bandfilterfolie sein, die schmale Bänder des sichtbaren Lichts ausblendet.

Die Reflexionsschicht ist zum Reflektieren von sichtbarem Licht der Bildanzeigevorrichtung geeignet ausgebildet. Die Reflexionsschicht reflektiert mit einem Reflexionsgrad von vorzugsweise 30 % oder mehr, bevorzugt 50 % oder mehr, ganz besonders 70 % oder mehr und insbesondere 90 % oder mehr des von der Bildanzeigevorrichtung auf die Reflexionsschicht auftreffenden p-polarisierten Lichtes. Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Gemäß einer bevorzugten Ausgestaltung der erfindungsgemäßen Projektionsanordnung kann die Bildanzeigevorrichtung, welche auch als Display bezeichnet werden kann, als Liqiudcrystal- (LCD-) Display, Thin-Film-Transistor- (TFT-) Display, Light-Emitting-Diode- (LED-) Display, Organic-Light-Emitting-Diode- (OLED-) Display, Electroluminescent- (EL-) Display, microLED-Display oder dergleichen, bevorzugt als LCD-Display, ausgebildet sein. Aufgrund der hohen Reflexion von p-polarisierten Licht sind energieintensive Projektoren, wie sie meist bei Head-Up-Display-Anwendungen eingesetzt werden, nicht notwendig. Es genügen die genannten Displayvarianten und andere ähnlich energiesparsame Bildanzeigevorrichtungen. Dies hat zur Folge, dass der Energieverbrauch reduziert werden kann.

Vorzugsweise weist die erfindungsgemäße Projektionsanordnung in einem Randbereich der Verbundscheibe, welcher typischer Weise an den Scheibenrand der Scheibe angrenzt, mindestens den Maskierungsstreifen auf. Der große Vorteil dieser Anordnung ergibt sich aus der Nutzung der Verbundscheibe in einem Fahrzeug als Windschutzscheibe, da der opake Randbereich damit außerhalb des Sichtbereiches des Fahrers liegt.

Der Maskierungsstreifen kann grundsätzlich auf jeder Scheibenseite der Außenscheibe angeordnet sein. Bei einer Verbundscheibe ist dieser bevorzugt auf der Innenseite der Außenscheibe aufgebracht, wo er vor äußeren Einflüssen geschützt ist.

Gemäß einer bevorzugten Ausgestaltung der erfindungsgemäßen Projektionsanordnung ist die Reflexionsschicht an der Außenseite der Innenscheibe angeordnet, was eine einfache Herstellung ermöglicht. Es konnte festgestellt werden, dass bei dieser Anordnung der Anteil des reflektierten Lichts besonders hoch ist, da eine Transmission des p-polarisierten Lichtes durch die thermoplastische Zwischenschicht vermieden wird.

Gemäß einer weiteren bevorzugten Ausgestaltung der erfindungsgemäßen Projektionsanordnung ist die Reflexionsschicht auf der Innenseite der Außenscheibe auf der (opaken) Maskierungsschicht angeordnet. Es konnte festgestellt werden, dass bei dieser Anordnung der Anteil des reflektierten Lichts mit p-Polarisation besonders hoch ist. Zwischen der Maskierungsschicht und der Reflexionsschicht können eine oder mehrere weitere Schichten angeordnet sein.

Gemäß einer weiteren bevorzugten Ausgestaltung der erfindungsgemäßen Projektionsanordnung ist, zusätzlich zu dem ersten Maskierungsstreifen auf der Innenseite der Außenscheibe, mindestens ein weiterer Maskierungsstreifen auf der Außenseite der Innenscheibe und/oder auf der Innenseite der Innenscheibe angeordnet. Der weitere Maskierungsstreifen dient für eine Haftungsverbesserung der Außenscheibe sowie Innenscheibe und ist bevorzugt mit Keramik-Partikeln versetzt, die dem Maskierungsstreifen eine raue und haftende Oberfläche geben, was auf der Innenseite der Innenscheibe beispielsweise das Einkleben der Verbundscheibe in die Fahrzeugkarosserie unterstützt. Auf der Außenseite der Innenscheibe unterstützt dies das Laminieren der beiden Einzelscheiben der Verbundscheibe. Ein auf der Innenseite der Innenscheibe aufgebrachter weiterer Maskierungsstreifen kann auch aus ästhetischen Gründen vorgesehen sein, beispielsweise, um die Kante der Reflexionsschicht zu kaschieren oder die Kante des Übergangs zum transparenten Bereich zu gestalten.

Gemäß einer weiteren bevorzugten Ausgestaltung der erfindungsgemäßen Projektionsanordnung ist in einem Abschnitt in dem die Reflexionsschicht in Überdeckung zum Maskierungsstreifen auf der Innenseite der Außenscheibe angeordnet ist, der Maskierungsstreifen vorzugsweise mit einer Verbreiterung versehen. Dies bedeutet, dass der Maskierungsstreifen eine größere Breite (Abmessung senkrecht zur Erstreckung) aufweist als in anderen Abschnitten. Der Maskierungsstreifen kann auf diese Weise in geeigneter Weise an die Abmessungen der Reflexionsschicht angepasst werden. Der Maskierungsstreifen ist außerdem den Randbereich umlaufend ausgebildet.

Die Reflexionsschicht umfasst vorzugsweise mindestens ein Metall ausgewählt aus der Gruppe, bestehend aus Aluminium, Zinn, Titan, Zirkonium, Hafnium, Vanadium, Niob, Tantal, Chrom, Mangan, Eisen, Cobalt, Rhodium, Iridium, Nickel, Palladium, Platin, Kupfer, Silber, Gold oder Mischungslegierungen davon. Die Reflexionsschicht kann unabhängig davon oder zusätzlich Siliziumoxid enthalten.

In einer besonderen Ausführungsform der Erfindung ist die Reflexionsschicht eine Beschichtung enthaltend einen Dünnschichtstapel, also eine Schichtenfolge dünner Einzelschichten. Dieser Dünnschichtstapel enthält eine oder mehrere elektrisch leitfähige Schichten auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Paladium, Gold, Kupfer oder Aluminium. Materialen auf der Basis von Silber sind besonders geeignet, um p-polarisiertes Licht zu reflektieren. Die Verwendung von Silber in Reflexionsschichten hat sich als besonders vorteilhaft bei der Reflexion von p-polarisiertem Licht erwiesen. Die Beschichtung weist eine Dicke von 5 µm bis 50 µm und bevorzugt von 8 µm bis 25 µm auf.

Ist die Reflexionsschicht als eine Beschichtung ausgebildet wird sie bevorzugt durch physikalische Gasphasenabscheidung (PVD), besonders bevorzugt durch Kathodenzerstäubung ("Sputtern") und ganz besonders bevorzugt durch magnetfeldunterstütze Kathodenzerstäubung ("Magnetron-Sputtern") auf die Innenscheibe oder die Außenscheibe aufgebracht. Die Beschichtung wird bevorzugt auf die Außenseite der Innenscheibe aufgebracht, kann aber auch auf der Innenseite der Außenscheibe aufgebracht sein. Grundsätzlich kann die Beschichtung aber auch beispielsweise mittels chemischer Gasphasenabscheidung (CVD), beispielsweise plasmagestützte Gasphasenabscheidung (PECVD), durch Aufdampfen oder durch Atomlagenabscheidung (atomic layer deposition, ALD) aufgebracht werden. Die Beschichtung wird bevorzugt vor der Lamination auf die Scheiben aufgebracht.

Die Reflexionsschicht kann auch als eine reflektierende Folie ausgebildet sein, die p-polarisiertes Licht reflektiert. Die Reflexionsschicht kann eine Trägerfolie mit einer reflektierenden Beschichtung sein oder eine reflektierende Polymerfolie. Die reflektierende Beschichtung umfasst bevorzugt mindestens eine Schicht auf Basis eines Metalls und/oder eine dielektrische Schichtabfolge mit alternierenden Brechungsindizes. Die Schicht auf Basis eines Metalls enthält bevorzugt Silber und/oder Aluminium, oder besteht daraus. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Die reflektierende Polymerfolie umfasst bevorzugt dielektrische Polymerschichten oder besteht daraus. Die dielektrischen Polymerschichten enthalten bevorzugt PET. Ist die Reflexionsschicht als eine reflektierende Folie ausgebildet, ist sie bevorzugt von 30 µm bis 300 µm, besonders bevorzugt von 50 µm bis 200 µm und insbesondere von 100 µm bis 150 µm dick.

Handelt es sich um eine beschichtete, reflektierende Folie können zur Herstellung ebenfalls die Beschichtungsverfahren CVD oder PVD angewendet werden.

Gemäß einer weiteren bevorzugten Ausgestaltung der erfindungsgemäßen Projektionsanordnung ist die Reflexionsschicht als reflektierende Folie ausgebildet und innerhalb der thermoplastischen Zwischenschicht angeordnet. Der Vorteil dieser Anordnung ist, dass die Reflexionsschicht nicht mittels Dünnschichttechnologie (beispielsweise CVD und PVD) auf der Außenscheibe oder Innenscheibe aufgebracht werden muss. Hieraus ergeben sich Verwendungen der Reflexionsschicht mit weiteren vorteilhaften Funktionen wie eine homogenere Reflexion des p-polarisierten Lichtes an der Reflexionsschicht. Außerdem kann die Herstellung der Verbundscheibe vereinfacht werden, da die Reflexionsschicht nicht vor der Laminierung über ein zusätzliches Verfahren auf der Außen- oder Innenscheibe angeordnet werden muss.

In einer besonders bevorzugten Ausführungsform der Erfindung ist die Reflexionsschicht eine reflektierende Folie, die metallfrei ist und sichtbare Lichtstrahlen mit einer p-Polarisation reflektiert. Die Reflexionsschicht ist eine Folie, die auf Basis synergetisch miteinander wirkenden Prismen und reflektierender Polarisatoren funktioniert. Derartige Folien zur Verwendung von Reflexionsschichten sind im Handel erhältlich, beispielsweise von der 3M Company.

In einer weiteren bevorzugten Ausführungsform der Erfindung ist die Reflexionsschicht ein holographisches optisches Element (HOE). Mit dem Ausdruck HOE sind Elemente gemeint, die auf dem Funktionsprinzip der Holographie beruhen. HOE verändern das Licht im Strahlengang durch die im Hologramm meist als Veränderung des Brechungsindex gespeicherte Information. Ihre Funktion basiert auf der Überlagerung verschiedener ebener oder sphärischer Lichtwellen, deren Interferenzmuster den gewünschten optischen Effekt bewirkt. HOE werden im Transportbereich beispielsweise bereits in Head-Up-Displays eingesetzt. Der Vorteil bei der Verwendung eines HOE im Vergleich zu einfach reflektierenden Schichten ergibt sich aus einer größeren geometrischen Gestaltungsfreiheit hinsichtlich der Anordnung von Augen- und Projektorposition sowie den jeweiligen Neigungswinkeln, z.B. von Projektor und reflektierender Schicht. Des Weiteren werden bei dieser Variante Doppelbilder besonders stark reduziert oder sogar verhindert. HOE eigenen sich für Darstellungen von realen Bildern oder aber auch virtuellen Bildern in unterschiedlichen Bildweiten. Darüber hinaus kann der geometrische Winkel der Reflexion mit dem HOE eingestellt werden, sodass sich beispielsweise bei einer Anwendung in einem Fahrzeug die für den Fahrer übermittelten Informationen aus dem gewünschten Blickwinkel sehr gut darstellen lassen.

In vorteilhafter Weise können durch die Reflexionsschicht die Eigenschaften des reflektierten p-polarisierten Lichts gegenüber einer bloßen Reflexion des Lichts an der Scheibe verbessert werden. Der Anteil des reflektierten p-polarisierten Lichts ist vergleichsweise hoch, wobei die Reflektivität bei Licht beispielsweise ca. 90% beträgt.

In einer besonderen Ausführungsform der Erfindung ist eine hochbrechende Beschichtung auf die gesamte oder einen Bereich der Innenseite der Innenscheibe aufgebracht. Die hochbrechende Beschichtung ist bevorzugt in direktem räumlichen Kontakt mit der Innenseite der Innenscheibe. Die hochbrechende Beschichtung ist dabei mindestens in einem Bereich auf der Innenseite der Innenscheibe angeordnet, welche in Durchsicht durch die Verbundscheibe in vollständiger Überlappung mit der Reflexionsschicht ist. Das bedeutet, dass das p-polarisierte Licht, welches von der Bildanzeigevorrichtung auf die Reflexionsschicht projiziert wird, durch die hochbrechende Beschichtung verläuft, bevor es auf der Reflexionsschicht auftrifft. Mit "vollständiger Überlappung" eines Elements A mit einem Element B ist im Sinne der Erfindung gemeint, dass die orthonormale Projektion von Element A zur Ebene von Element B vollständig innerhalb von Element B angeordnet ist.

Die hochbrechende Beschichtung weist einen Brechungsindex von mindestens 1,7, besonders bevorzugt mindestens 1,9, ganz besonders bevorzugt mindestens 2,0 auf. Die Erhöhung des Brechungsindexes führt eine hochbrechende Wirkung herbei. Die hochbrechende Beschichtung bewirkt eine Schwächung der Reflexion vom p-polarisierten Licht an der innenraumseitigen Oberfläche der Innenscheibe, so dass die gewünschte Reflexion der Reflexionsbeschichtung kontraststärker in Erscheinung tritt.

Gemäß einer Erklärung der Erfinder beruht der Effekt auf der Steigerung des Brechungsindex der innenraumseitigen Oberfläche infolge der hochbrechenden Beschichtung. Dadurch wird der Brewsterwinkel α_{Brewster} an der Grenzfläche erhöht, da dieser bekanntlich als ${α}_{Brewster} = arctan \left(\frac{{n}_{2}}{{n}_{1}}\right)$ bestimmt wird, wobei *n₁* der Brechungsindex von Luft ist und *n₂* der Brechungsindex des Materials, auf das die Strahlung trifft. Die hochbrechende Beschichtung mit dem hohen Brechungsindex führt zu einer Erhöhung des effektiven Brechungsindex der Glasoberfläche und damit zu einer Verschiebung des Brewsterwinkels zu größeren Werten im Vergleich zu einer unbeschichteten Glasoberfläche. Dadurch wird bei üblichen geometrischen Relationen von Projektionsanordnungen, die auf HUD-Technologie basieren, die Differenz zwischen dem Einstrahlwinkel und dem Brewsterwinkel geringer, so dass die Reflexion des p-polarisierten Lichts an der Innenseite der Innenscheibe unterdrückt wird und das hierdurch erzeugte Geisterbild geschwächt wird.

Die hochbrechende Beschichtung ist bevorzugt aus einer einzelnen Schicht ausgebildet und weist keine weiteren Schichten unterhalb oder oberhalb dieser Schicht auf. Eine einzelne Schicht ist ausreichend, um den Effekt zu erzielen, und technisch einfacher als das Aufbringen eines Schichtenstapels. Grundsätzlich kann die hochbrechende Beschichtung aber auch mehrere Einzelschichten umfassen, was zur Optimierung bestimmter Parameter im Einzelfall gewünscht sein kann.

Geeignete Materialien für die hochbrechende Beschichtung sind Siliziumnitrid (Si₃N₄), ein Silizium-Metall-Mischnitrid (beispielsweise Siliziumzirkoniumnitrid (SiZrN), Silizium-Aluminium-Mischnitrid, Silizium-Hafnium-Mischnitrid oder Silizium-Titan-Mischnitrid), Aluminiumnitrid, Zinnoxid, Manganoxid, Wolframoxid, Nioboxid, Wismutoxid, Titanoxid, Zinn-Zink-Mischoxid und Zirkoniumoxid. Darüber hinaus können auch Übergangsmetalloxide (wie Scandiumoxid, Yttriumoxid, Tantaloxid) oder Lanthanoidoxide (wie Lanthanoxid oder Ceroxid) eingesetzt werden. Die hochbrechende Beschichtung enthält bevorzugt eines oder mehrere dieser Materialien oder ist auf deren Basis ausgebildet.

Die hochbrechende Beschichtung kann durch eine physikalische oder chemische Gasphasenabscheidung, also eine PVD- oder CVD-Beschichtung (PVD: *physical vapour deposition, CVD: chemical vapour deposition*) aufgebracht werden. Geeignete Materialien, auf deren Basis die Beschichtung bevorzugt ausgebildet ist, sind insbesondere Siliziumnitrid, ein Silizium-Metall-Mischnitrid (beispielsweise Siliziumzirkoniumnitrid, Silizium-Aluminium-Mischnitrid, Silizium-Hafnium-Mischnitrid oder Silizium-Titan-Mischnitrid), Aluminiumnitrid, Zinnoxid, Manganoxid, Wolframoxid, Nioboxid, Wismutoxid, Titanoxid, Zirkoniumoxid, Zirkoniumnitrid oder Zinn-Zink-Mischoxid. Bevorzugt ist die hochbrechende Beschichtung eine durch Kathodenzerstäubung aufgebrachte ("aufgesputterte") Beschichtung, insbesondere eine durch magnetfeldunterstütze Kathodenzerstäubung aufgebrachte ("magnetron-aufgesputterte") Beschichtung.

Alternativ ist die hochbrechende Beschichtung eine Sol-Gel-Beschichtung. Beim Sol-Gel-Verfahren wird zunächst ein Sol, welches die Präkursoren der Beschichtung enthält bereitgestellt und gereift. Die Reifung kann eine Hydrolyse der Präkursoren beinhalten und/oder eine (partielle) Reaktion zwischen den Präkursoren. Die Präkursoren liegen üblicherweise in einem Lösungsmittel vor, bevorzugt Wasser, Alkohol (insbesondere Ethanol) oder ein Wasser-Alkohol-Gemisch. Das Sol enthält dabei bevorzugt Siliziumoxid-Präkursoren in einem Lösungsmittel. Die Präkursoren sind bevorzugt Silane, insbesondere Tetraethoxy-Silane oder Methyltriethoxysilan (MTEOS). Alternativ können aber auch Silikate als Präkursoren eingesetzt werden, insbesondere Natrium-, Lithium- oder Kaliumsilikate, beispielsweise Tetramethylorthosilikat, Tetraethylorthosilikat (TEOS), Tetraisopropylorthosilikat, oder Organosilane der allgemeinen Form R2nSi(OR1)4-n. Dabei ist bevorzugt R1 eine Alkylgruppe, R2 eine Alkyl-, Epoxy-, Acrylat-, Methacrylat-, Amin-, Phenyl- oder Vinylgruppe, und n eine ganze Zahl von 0 bis 2. Es können auch Siliziumhalogenide oder -alkoxide eingesetzt werden. Die Siliziumoxid-Präkursoren führen zu einer Sol-Gel-Beschichtung aus Siliziumoxid. Um den Brechungsindex der Beschichtung auf den Wert zu erhöhen, werden dem Sol brechungsindexsteigernde Zusätze hinzugefügt, bevorzugt Titanoxid und/oder Zirkoniumoxid, oder deren Präkursoren. In der fertiggestellten Beschichtung liegen die brechungsindexsteigernden Zusätze in einer Siliziumoxid-Matrix vor. Das Molverhältnis von Siliziumoxid zu brechungsindexsteigernden Zusätzen kann in Abhängigkeit vom gewünschten Brechungsindex frei gewählt werden und beträgt beispielsweise um 1:1.

Brechungsindizes sind, sofern nichts anderes angegeben, im Rahmen der vorliegenden Erfindung grundsätzlich bezogen auf eine Wellenlänge von 550 nm angegeben. Methoden zur Bestimmung von Brechungsindizes sind dem Fachmann bekannt. Die im Rahmen der Erfindung angegebenen Brechungsindizes sind beispielsweise mittels Ellipsometrie bestimmbar, wobei kommerziell erhältliche Ellipsometer eingesetzt werden können.

In einer weiteren besonderen Ausführungsform der Erfindung ist die hochbrechende Beschichtung ganz oder bereichsweise auf dem weiteren Maskierungsstreifen aufgebracht, wobei der weitere Maskierungsstreifen auf der Innenseite der Innenscheibe aufgebracht ist. Das Wort "bereichsweise" bedeutet in diesem Zusammenhang, dass die hochbrechende Beschichtung teilweise oder vollständig auf dem weiteren Maskierungsstreifen angeordnet ist, zusätzlich jedoch auch auf der Innenseite der Innenscheibe aufgebracht sein kann. Dies hat den Vorteil, dass die hochbrechende Schicht unabhängig davon, ob zuvor ein Maskierungsstreifen auf die Innenscheibe aufgetragen wurde, auf der gesamten Innenscheibe angebracht werden kann.

Ferner erstreckt sich die Erfindung auf ein Verfahren zur Herstellung einer erfindungsgemäßen Projektionsanordnung. Das Verfahren umfasst:
(a) In einem ersten Verfahrensschritt werden eine thermoplastische Zwischenschicht und eine Reflexionsschicht zwischen einer transparenten Außenscheibe und einer transparenten Innenscheibe zu einem Schichtstapel angeordnet. Die Außenscheibe weist dabei eine von der thermoplastischen Zwischenschicht abgewandte Außenseite und eine der thermoplastischen Zwischenschicht zugewandte Innenseite und die Innenscheibe eine der thermoplastischen Zwischenschicht zugewandte Außenseite und eine von der thermoplastischen Zwischenschicht abgewandte Innenseite auf. Die Reflexionsschicht ist dabei zum Reflektieren von p-polarisiertem Licht geeignet ausgebildet. Außerdem ist die Reflexionsschicht selbst opak oder sie wird in Durchsicht durch die Verbundscheibe ausgehend von der Innenseite der Innenscheibe räumlich vor einem opaken Hintergrund angeordnet.
(b) In einem zweiten Verfahrensschritt wird der Schichtstapel zu einer Verbundscheibe laminiert
(c) Im letzten Verfahrensschritt wird eine Bildanzeigevorrichtung angeordnet, welche auf die Reflexionsschicht gerichtet wird und diese durch die Innenscheibe mit einem p-polarisiertem Licht bestrahlt.

Die Reflexionsschicht reflektiert das p-polarisierte Licht. Das p-polarisierte Licht verlässt die Verbundscheibe auf der Innenseite der Innenscheibe.

Die Laminierung des Schichtstapels erfolgt unter Einwirkung von Hitze, Vakuum und/oder Druck, wobei die einzelnen Schichten durch mindestens eine thermoplastische Zwischenschicht miteinander verbunden (laminiert) werden. Es können an sich bekannte Verfahren zur Herstellung einer Verbundscheibe verwendet werden. Es können beispielsweise sogenannte Autoklav-Verfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 130 °C bis 145 °C. Die Außenscheibe, die Innenscheibe und die thermoplastische Zwischenschicht können auch in einem Kalander zwischen mindestens einem Walzenpaar zu einer Verbundscheibe verpresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80°C bis 170°C laminiert werden können.

Weiterhin kann die Verbundscheibe in Fortbewegungsmitteln für den Verkehr auf dem Lande, in der Luft oder zu Wasser, insbesondere in Kraftfahrzeugen verwendet werden, wobei die Verbundscheibe beispielsweise als Windschutzscheibe, Heckscheibe, Seitenscheiben und/oder Glasdach, bevorzugt als Windschutzscheibe verwendet werden kann. Bevorzugt ist die Verwendung der Verbundscheibe als Fahrzeug-Windschutzscheibe. Alternativ kann die Verglasung eine Architekturverglasung, beispielsweise in einer Außenfassade eines Gebäudes oder eine Trennscheibe im Innern eines Gebäudes, oder ein Einbauteil in Möbeln oder Geräten sein.

Weiterhin erstreckt sich die Erfindung auf die Verwendung einer Projektionsanordnung in Fahrzeugen für den Verkehr auf dem Lande, in der Luft oder zu Wasser, wobei die Verbundscheibe bevorzugt eine Windschutzscheibe ist.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1: eine Querschnittansicht eines Ausführungsbeispiels der erfindungsgemäßen Projektionsanordnung,
- Figur 2: eine Draufsicht auf die Verbundscheibe von Fig. 1,
- Figuren 3-7: vergrößerte Querschnittansichten verschiedener Ausgestaltungen der erfindungsgemäßen Projektionsanordnung,
- Figur 8: ein Diagramm, in dem die gemessene Reflektivität R in Abhängigkeit der Wellenlänge WL bei zwei unterschiedlichen Verbundscheiben gezeigt ist und
- Figur 9: ein Ablaufdiagramm zur Veranschaulichung des erfindungsgemäßen Verfahrens.

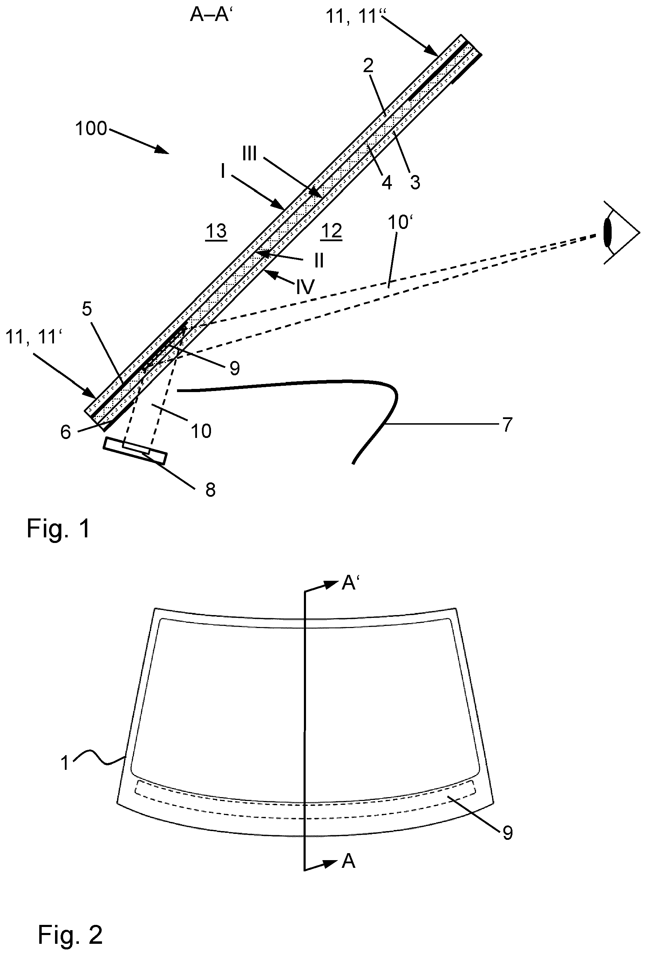

Figur 1 zeigt eine Querschnittansicht auf ein Ausführungsbeispiel der erfindungsgemäßen Projektionsanordnung 100 in einem Fahrzeug in einer stark vereinfachten, schematischen Darstellung. Eine Draufsicht der Verbundscheibe 1 der Projektionsanordnung 100 ist in Figur 2 gezeigt. Die Querschnittansicht von Figur 1 entspricht der Schnittlinie A-A der Verbundscheibe 1, wie in Figur 2 angedeutet ist.

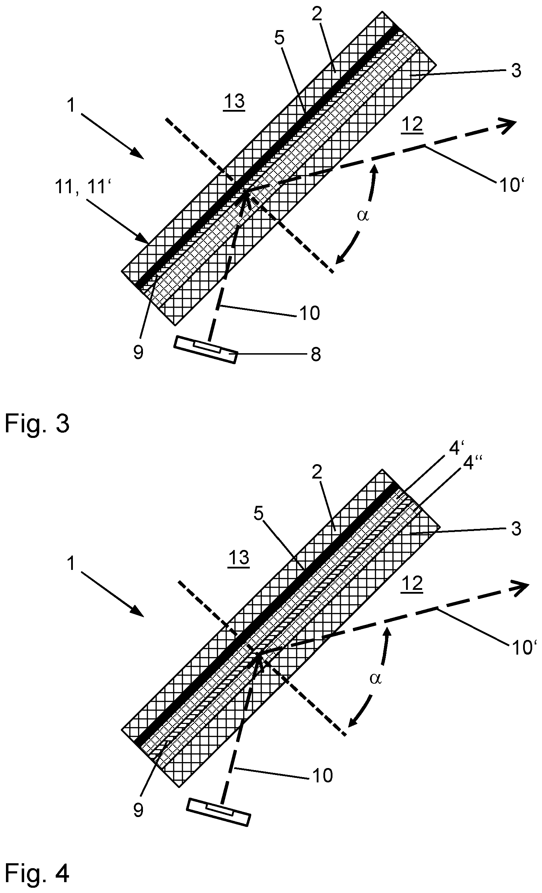

Die Verbundscheibe 1 ist in Form einer Verbundscheibe ausgebildet (siehe auch Figuren 3 bis 4) und umfasst eine Außenscheibe 2 und eine Innenscheibe 3 mit einer thermoplastischen Zwischenschicht 4, welche zwischen den Scheiben angeordnet ist. Die Verbundscheibe 1 ist beispielsweise in ein Fahrzeug eingebaut und trennt einen Fahrzeuginnenraum 12 von einer äußeren Umgebung 13 ab. Beispielsweise ist die Verbundscheibe 1 die Windschutzscheibe eines Kraftfahrzeugs.

Die Außenscheibe 2 und die Innenscheibe 3 bestehen jeweils aus Glas, vorzugsweise thermisch vorgespanntem Kalk-Natron-Glas und sind für sichtbares Licht transparent. Die thermoplastische Zwischenschicht 4 besteht aus einem thermoplastischen Kunststoff, vorzugsweise Polyvinylbutyral (PVB), Ethylenvinylacetat (EVA) und/oder Polyethylenterephthalat (PET).

Die Außenseite I der Außenscheibe 2 ist von der thermoplastischen Zwischenschicht 4 abgewandt und ist gleichzeitig die Außenfläche der Verbundscheibe 1. Die Innenseite II der Außenscheibe 2 sowie die Außenseite III der Innenscheibe 3 sind jeweils der Zwischenschicht 4 zugewandt. Die Innenseite IV der Innenscheibe 3 ist von der thermoplastischen Zwischenschicht 4 abgewandt und ist gleichzeitig die Innenseite der Verbundscheibe 1. Es versteht sich, dass die Verbundscheibe 1 jede beliebige geeignete geometrische Form und/oder Krümmung aufweisen kann. Als Verbundscheibe 1 weist sie typischer Weise eine konvexe Wölbung auf.

In einem Randbereich 11 der Verbundscheibe 1 befindet sich auf der Innenseite II der Außenscheibe 2 ein rahmenförmig umlaufender erster Maskierungsstreifen 5. Der erste Maskierungsstreifen 5 ist opak und verhindert die Sicht auf innenseitig der Verbundscheibe 1 angeordnete Strukturen, beispielsweise eine Kleberaupe zum Einkleben der Verbundscheibe 1 in eine Fahrzeugkarosserie. Der erste Maskierungsstreifen 5 ist vorzugsweise schwarz. Der erste Maskierungsstreifen 5 besteht aus einem herkömmlicherweise für Maskierungsstreifen verwendetem, elektrisch nichtleitendem Material, beispielsweise eine schwarz eingefärbte Siebdruckfarbe, die eingebrannt ist.

Weiterhin weist die Verbundscheibe 1 im Randbereich 11 auf der Innenseite IV der Innenscheibe 3 einen zweiten Maskierungsstreifen 6 auf. Der zweite Maskierungsstreifen 6 ist rahmenförmig umlaufend ausgebildet. Wie der erste Maskierungsstreifen 5 besteht der zweite Maskierungsstreifen 6 aus einem herkömmlicherweise für Maskierungsstreifen verwendeten, elektrisch nichtleitendem Material, beispielsweise eine schwarz eingefärbte Siebdruckfarbe, die eingebrannt ist.

Auf dem ersten Maskierungsstreifen 5 befindet sich eine Reflexionsschicht 9, welche mittels des PVD-Verfahrens aufgedampft ist. Im Durchblick durch die Verbundscheibe 1 koinzidiert die Reflexionsschicht 9 nicht mit dem zweiten Maskierungsstreifen 6. Die Reflexionsschicht 9 ist beispielsweise eine Metallbeschichtung, welche mindestens einen Dünnschichtstapel enthält mit mindestens einer Silberschicht und einer dielektrischen Schicht. Alternativ kann die Reflexionsschicht 9 auch als reflektierende Folie ausgebildet sein und auf dem ersten Maskierungsstreifen 5 angeordnet sein. Die reflektierende Folie kann eine Metallbeschichtung enthalten oder aber aus dielektrischen Polymerschichten in einer Schichtabfolge bestehen. Auch Kombinationen dieser Varianten sind möglich.

Die Reflexionsschicht 9 ist in Durchsicht durch die Verbundscheibe 1 in Überdeckung zum ersten Maskierungsstreifen 5 angeordnet, wobei der erste Maskierungsstreifen 5 die Reflexionsschicht 9 vollständig überdeckt, d.h. die Reflexionsschicht 9 weist keinen Abschnitt auf, der nicht in Überdeckung zum ersten Maskierungsstreifen 5 ist. Die Reflexionsschicht 9 ist hier beispielsweise nur im unteren (motorseitigen) Abschnitt 11' des Randbereichs 11 der Verbundscheibe 1 angeordnet. Möglich wäre aber auch, die Reflexionsschicht 9 im oberen (dachseitigen) Abschnitt 11" oder in einem seitlichen Abschnitt des Randbereichs 11 anzuordnen. Des Weiteren könnten mehrere Reflexionsschichten 9 vorgesehen sein, die beispielweise im unteren (motorseitigen) Abschnitt 11' und im oberen (dachseitigen) Abschnitt 11" des Randbereichs 11 angeordnet sind. Beispielsweise könnten die Reflexionsschichten 9 so angeordnet sein, dass ein (teilweise) umlaufendes Bild erzeugt wird.

Der erste Maskierungsstreifen 5 ist im unteren (motorseitigen) Abschnitt 11' des Randbereichs 11 verbreitert, d.h. der erste Maskierungsstreifen 5 weist im unteren (motorseitigen) Abschnitt 11' des Randbereichs 11 ein größere Breite als im oberen (dachseitigen) Abschnitt 11" des Randbereichs 11 (wie auch in den in Figur 1 nicht erkennbaren seitlichen Abschnitten des Randbereichs 11) der Verbundscheibe 1 auf. Als "Breite" wird die Abmessung des ersten Maskierungsstreifens 5 senkrecht zu dessen Erstreckung verstanden. Die Reflexionsschicht 9 ist hier beispielsweise oberhalb des zweiten Maskierungsstreifens 6 angeordnet (d.h. nicht in Überdeckung).

Die Projektionsanordnung 100 weist weiterhin eine im Armaturenbrett 7 angeordnete Bildanzeigevorrichtung 8 als Bildgeber auf. Die Bildanzeigevorrichtung 8 dient zur Erzeugung von p-polarisiertem Licht 10 (Bildinformationen), das auf die Reflexionsschicht 9 gerichtet wird und durch die Reflexionsschicht 9 als reflektiertes Licht 10' in den Fahrzeuginnenraum 12 reflektiert wird, wo es von einem Betrachter, z.B. Fahrer, gesehen werden kann. Die Reflexionsschicht 9 ist zur Reflexion des p-polarisiertem Lichts 10 der Bildanzeigevorrichtung 8, d.h. eines Bilds der Bildanzeigevorrichtung 8, geeignet ausgebildet. Das p-polarisierte Licht 10 der Bildanzeigevorrichtung 8 trifft bevorzugt mit einem Einfallswinkel von 50° bis 80°, insbesondere von 60° bis 70° auf die Verbundscheibe 1, typischerweise etwa 65°, wie es bei HUD-Projektionsanordnungen üblich ist. Möglich wäre beispielsweise auch, die Bildanzeigevorrichtung 8 in der A-Säule eines Kraftfahrzeugs oder am Dach (jeweils fahrzeuginnenraumseitig) anzuordnen, falls die Reflexionsschicht 9 hierzu in geeigneter Weise positioniert ist. Wenn mehrere Reflexionsschichten 9 vorgesehen sind, kann jeder Reflexionsschicht 9 eine separate Bildanzeigevorrichtung 8 zugeordnet sein, d.h. es können mehrere Bildanzeigevorrichtungen 8 angeordnet sein. Die Bildanzeigevorrichtung 8 ist beispielsweise ein Display, wie ein LCD-Display, OLED-Display, EL-Display oder µLED-Display. Möglich wäre beispielsweise auch, dass es sich bei der Verbundscheibe 1 um eine Dachscheibe, Seiten- oder Heckscheibe handelt.

In der Aufsicht von Figur 2 ist die Reflexionsschicht 9 in Erstreckung entlang des unteren Abschnitts 11' des Randbereichs 11 der Verbundscheibe 1 dargestellt.

Es wird nun Bezug auf die Figuren 3 bis 7 genommen, worin vergrößerte Querschnittansichten verschiedener Ausgestaltungen der Verbundscheibe 1 gezeigt sind. Die Querschnittansichten der Figuren 3 bis 7 entsprechen der Schnittlinie A-A im unteren Abschnitt 11' des Randbereichs 11 der Verbundscheibe 1, wie in Figur 2 angedeutet ist.

In der in Figur 3 gezeigten Variante der Verbundscheibe 1, befindet sich der erste (opake) Maskierungsstreifen 5 auf der Innenseite II der Außenscheibe 2. Die Reflexionsschicht 9 ist auf dem ersten Maskierungsstreifen 5 unmittelbar aufgebracht. Das p-polarisierte Licht 10 von der Bildanzeigevorrichtung 8 wird von der Reflexionsschicht 9 als reflektiertes Licht 10' in den Fahrzeuginnenraum 12 reflektiert. Die p-Polarisationen des Lichts 10, 10' ist schematisch veranschaulicht. Aufgrund des Einfallswinkels des p-polarisierten Lichtes 10 auf der Verbundscheibe 1 nahe des Brewster-Winkels wird das p-polarisierte Licht 10 kaum an der Transmission durch die Innenscheibe 3 gehindert. Diese Variante hat den Vorteil, dass ein relativ großer Anteil des einfallenden, p-polarisierten Lichts 10 reflektiert wird und anschließend, aufgrund der Tatsache, dass der Einfallswinkel gleich der Ausfallswinkel (In Figur 3 und 4 durch α gezeigt) ist, weitestgehend ungehindert durch die Innenscheibe 3 in den Fahrzeuginnenraum 12 transmittiert. Das Bild wird außerdem vor dem Hintergrund der (opaken) ersten Maskierungsschicht 5 mit hohem Kontrast gut erkennbar.

Die in Figur 4 gezeigte Variante der Verbundscheibe 1 unterscheidet sich von der Variante von Figur 3 nur dadurch, dass die Reflexionsschicht 9 als eine reflektierende Folie ausgebildet ist, die p-polarisiertes Licht 10 in den Fahrzeuginnenraum 12 reflektiert. Diese Variante stellt eine gangbare Alternative zu der in Figur 1 und 3 dargestellten Reflexionsschicht 9 dar, welche beispielsweise über die PVD-Technik auf den Maskierungsstreifen 5 aufgedampft wird.

Als weiterer Unterschied zur Variante von Figur 3 wird die Reflexionsschicht 9 in Figur 4 zwischen zwei thermoplastische Zwischenschichten 4', 4" (z.B. PVB-Folien) in die Verbundscheibe 1 einlaminiert. Um durch die Reflexionsschicht 9 bedingte Höhenunterschiede (Dickensprung) zum restlichen Teil der Verbundscheibe 1 auszugleichen, ist es vorteilhaft, wenn die thermoplastischen Zwischenschichten 4', 4" eine entsprechend geringere Dicke haben als außerhalb des Bereichs, wo die Reflexionsschicht 9 nicht vorgesehen ist. Hierdurch kann ein gleichmäßiger Abstand (d.h. konstante Gesamtdicke) zwischen der Außenscheibe 2 und der Innenscheibe 3 erzielt werden, so dass etwaiger Glasbruch beim Laminieren zuverlässig und sicher vermieden wird. Bei Verwendung von z.B. PVB-Folien haben diese im Bereich der Reflexionsschicht 9 eine geringere Dicke als dort, wo keine Reflexionsschicht 9 vorgesehen ist. Zudem ist das Bild vor dem Hintergrund der opaken (ersten) Maskierungsschicht 5 mit hohem Kontrast gut erkennbar. Die Reflexionsschicht 9 ist im Innern der Verbundscheibe 1 vor äußeren Einflüssen gut geschützt.

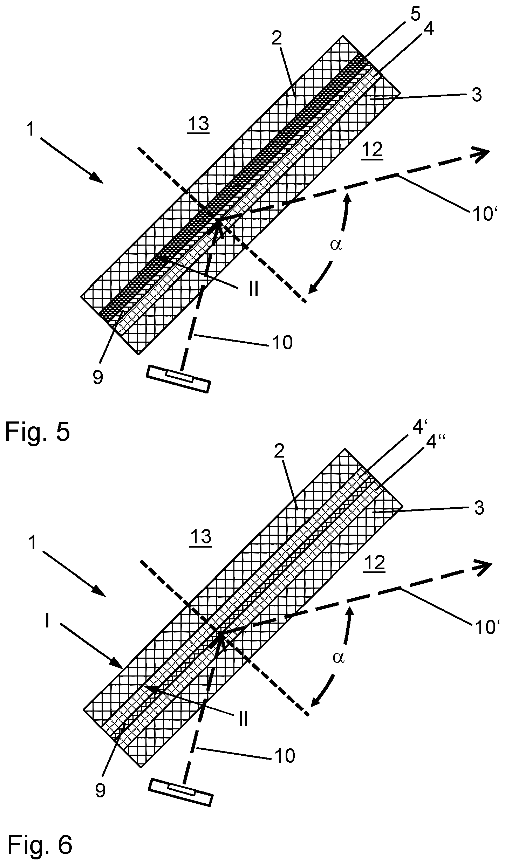

Die in Figur 5 gezeigte Variante der Verbundscheibe 1 unterscheidet sich von der Variante von Figur 4 nur dadurch, dass der erste (opake) Maskierungsstreifen 5 als lichtundurchlässige, thermoplastische Zwischenschicht ausgebildet ist, die auf der Innenseite II der Außenscheibe 2 angeordnet ist. Der erste Maskierungsstreifen 5 ist beispielsweise auf Basis einer gefärbten PVB-, EVA- oder PET-Folie ausgebildet. Die Reflexionsschicht 9 ist in diesem Fall zwischen der thermoplastischen Zwischenschicht 4 und dem ersten Maskierungsstreifen 5 einlaminiert.

Die in Figur 6 gezeigte Variante der Verbundscheibe 1 unterscheidet sich von der Variante von Figur 4 nur dadurch, dass kein (opaker) Maskierungsstreifen 5 auf der Außen- oder Innenseite I, II der Außenscheibe 2 angeordnet ist und die Reflexionsschicht 9 selbst opak ist. Die Reflexionsschicht 9 ist beispielsweise eine lichtundurchlässige reflektierende Folie, die innerhalb der thermoplastischen Zwischenschicht 4', 4" angeordnet ist. Aufgrund der Lichtundurchlässigkeit der Reflexionsschicht 9 liegt die Reflektivität für p-polarisiertes Licht 10 bei über 90 %. Das reflektierte, projizierte Bild wird dadurch für den Betrachter gut erkennbar.

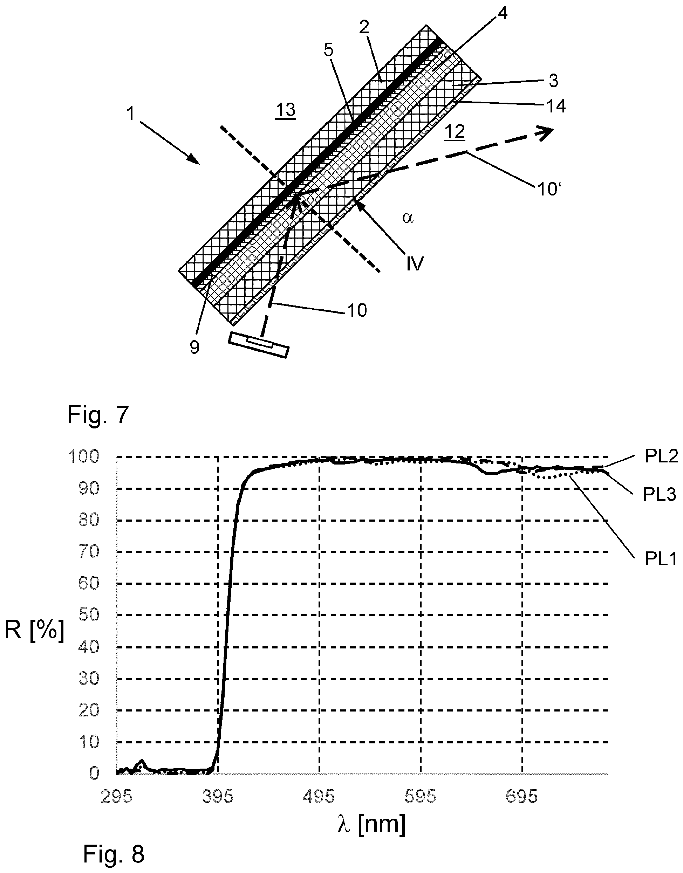

Die Figur 7 gezeigte Variante der Verbundscheibe 1 unterscheidet sich von der Variante von Figur 3 nur dadurch, dass eine hochbrechende Beschichtung 14 auf der Innenseite IV der Innenscheibe 3 angeordnet ist. Die hochbrechende Beschichtung 14 ist beispielsweise mittels des Sol-Gel-Verfahren aufgebracht und besteht aus einer Titanoxid-Beschichtung. Aufgrund des höheren Brechungsindex (beispielsweise 1,7) der hochbrechenden Beschichtung 14 im Vergleich zur Innenscheibe 3 kann der normalerweise bei ca. 56,5° liegende Brewster-Winkel (Für Kalk-Natron-Glas) vergrößert werden, was die Anwendung vereinfacht und den Effekt störender Doppelbilder durch die Reflexion an der Innenseite IV der Innenscheibe 3 reduziert.

In allen Ausführungsbeispielen ist die Reflexionsschicht 9 fahrzeuginnenraumseitig des ersten Maskierungsstreifens 5 angeordnet, d.h. in Sicht auf die Innenseite der Verbundscheibe 1 befindet sich die Reflexionsschicht 9 vor dem ersten Maskierungsstreifen 5.

In Figur 8 ist anhand eines Diagramms die gemessene Reflektivität R (in % des einfallenden p-polarisierten Lichts 10) in Abhängigkeit der Wellenlänge λ (nm) bei unterschiedlichen Einfallswinkeln des p-polarisierten Lichtes 10 auf die Verbundscheibe 1 gezeigt. Die Messungen erfolgten bei einem Winkel von 50° (PL1), 55° (PL2) und 65° (PL3) zur Normalen. Die Kurven beziehen sich auf eine Verbundscheibe 1 mit einer Reflexionsschicht 9, welche auf dem Maskierungsstreifen 5 angeordnet ist. Der Maskierungsstreifen 5 ist in diesem Fall auf der Innenseite II der Außenscheibe 2 angeordnet.

Ersichtlich ist, dass die Reflektivität bei allen Winkeln bei 90 % bis 100 % für Wellenlängen > 395 nm ist.

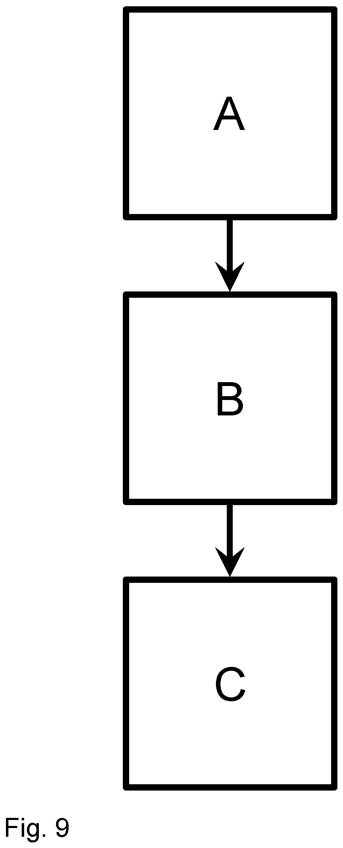

Figur 9 veranschaulicht anhand eines Ablaufdiagramms das erfindungsgemäße Verfahren.
A: Eine thermoplastische Zwischenschicht 4 und eine Reflexionsschicht 9 werden zwischen einer transparenten Außenscheibe 2 und einer transparenten Innenscheibe 3 zu einem Schichtstapel angeordnet. Die Reflexionsschicht 9 ist dabei selbst opak oder wird räumlich weiter entfernt von der Außenseite I der Außenscheibe 2 angeordnet als ein opaker Hintergrund, beispielsweise ein Maskierungsstreifen 5, welcher auf der Außenseite I oder Innenseite II der Außenscheibe 2 oder zwischen der Außenscheibe 2 und der Innenscheibe 3 angeordnet wird.
B: Der Schichtstapel wird zu einer Verbundscheibe 1 laminiert.
C: Eine Bildanzeigevorrichtung 8 wird an die Verbundscheibe 1 angeordnet, wobei das Sendeelement der Bildanzeigevorrichtung 8 der Reflexionsschicht 9 zugeordnet ist und diese durch die Innenscheibe 3 mit einem p-polarisiertem Licht 10 bestrahlt, wobei die Reflexionsschicht 9 das p-polarisierte Licht 10 reflektiert.

Aus obigen Ausführungen ergibt sich, dass die Erfindung eine verbesserte Projektionsanordnung zur Verfügung stellt, die eine gute Bilddarstellung mit hohem Kontrast ermöglicht. Unerwünschte Nebenbilder können vermieden werden. Die erfindungsgemäße Projektionsanordnung kann unter Anwendung bekannter Herstellungsverfahren einfach und kostengünstig produziert werden.
- 1: Verbundscheibe
- 2: Außenscheibe
- 3: Innenscheibe
- 4, 4', 4": thermoplastische Zwischenschicht
- 5: erster Maskierungsstreifen
- 6: zweiter Maskierungsstreifen
- 7: Armaturenbrett
- 8: Bildanzeigevorrichtung
- 9: Reflexionsschicht
- 10,10': p-polarisiertes Licht
- 11, 11', 11": Randbereich
- 12: Fahrzeuginnenraum
- 13: äußere Umgebung
- 14: hochbrechende Beschichtung
- 100: Projektionsanordnung

- I: Außenseite der Außenscheibe 2
- II: Innenseite der Außenscheibe 2
- III: Außenseite der Innenscheibe 3
- IV: Innenseite der Innenscheibe 3
- A-A': Schnittlinie

## Patentansprüche

1. Projektionsanordnung (100) umfassend
- eine Verbundscheibe (1), welche eine transparente Außenscheibe (2), eine thermoplastische Zwischenschicht (4), eine Reflexionsschicht (9) und eine transparente Innenscheibe (3) umfasst,
wobei die Außenscheibe (2) eine von der thermoplastischen Zwischenschicht (4) abgewandte Außenseite (I) und eine der thermoplastischen Zwischenschicht (4) zugewandte Innenseite (II) und die Innenscheibe (3) eine der thermoplastischen Zwischenschicht (4) zugewandte Außenseite (III) und eine von der thermoplastischen Zwischenschicht (4) abgewandte Innenseite (IV) aufweist,
wobei die Reflexionsschicht (9) zwischen der Außenscheibe (2) und der Innenscheibe (3) angeordnet ist und zum Reflektieren von p-polarisiertem Licht (10) geeignet ist,
wobei die Reflexionsschicht (9) selbst opak ist oder in Durchsicht durch die Verbundscheibe (1) ausgehend von der Innenseite (IV) der Innenscheibe (3) räumlich vor einem opaken Hintergrund angeordnet ist,
- eine Bildanzeigevorrichtung (8), welche auf die Reflexionsschicht (9) gerichtet und diese durch die Innenscheibe (3) mit einem p-polarisiertem Licht (10) bestrahlt, wobei die Reflexionsschicht (9) das p-polarisierte Licht (10) reflektiert, wobei "transparent" bedeutet, dass die Gesamttransmission der Verbundscheibe den gesetzlichen Bestimmungen für Windschutzscheiben gemäß ECE-R43 entspricht und wobei "opak" eine Lichttransmission von weniger als 10% bedeutet.

2. Projektionsanordnung (100) nach Anspruch 1, bei welcher die Reflexionsschicht (9) 30 % oder mehr, bevorzugt 50 % oder mehr und insbesondere 70 % oder mehr, von dem auf die Reflexionsschicht (9) auftreffenden p-polarisierten Licht (10) reflektiert.

3. Projektionsanordnung (100) nach einem der Ansprüche 1 oder 2, wobei die Bildanzeigevorrichtung (8) ein Display, wie ein LCD-Display, LED-Display, OLED-Display, Electroluminescent-Display, bevorzugt ein LCD-Display, ist.

4. Projektionsanordnung (100) nach einem der Ansprüche 1 bis 3, wobei der opake Hintergrund als mindestens ein Maskierungsstreifen (5) ausgebildet ist und in einem Randbereich der Außenscheibe (2) angeordnet ist.

5. Projektionsanordnung (100) nach Anspruch 4, bei welcher der mindestens eine Maskierungsstreifen (5) auf der Innenseite (II) der Außenscheibe (2) angeordnet ist.

6. Projektionsanordnung (100) nach Anspruch 4 oder 5, bei welcher die Reflexionsschicht (9) auf der Außenseite (III) der Innenscheibe (3) angeordnet ist.

7. Projektionsanordnung (100) nach Anspruch 5, bei welcher die Reflexionsschicht (9) auf der Innenseite (II) der Außenscheibe (2) auf dem Maskierungsstreifen (5) angeordnet ist.

8. Projektionsanordnung (100) nach einem der Ansprüche 4 bis 7, wobei der mindestens eine Maskierungsstreifen (5) in dem Randbereich der Verbundscheibe (1) umlaufend ausgebildet ist und insbesondere in einem Abschnitt (11'), der in Überdeckung zur Reflexionsschicht (9) ist, eine größere Breite aufweist als in hiervon verschiedenen Abschnitten (11").

9. Projektionsanordnung (100) nach einem der Ansprüche 1 bis 5, bei welcher die Reflexionsschicht (9) eine beschichtete oder unbeschichtete Folie ist und innerhalb der thermoplastischen Zwischenschicht (4) angeordnet ist.

10. Projektionsanordnung (100) nach einem der Ansprüche 1 bis 9, bei welcher die Reflexionsschicht (9) mindestens ein Metall, bevorzugt Silber, enthält.

11. Projektionsanordnung (100) nach einem der Ansprüche 1 bis 8, bei welcher die Reflexionsschicht (9) aus einer metallfreien, reflektierenden Folie besteht.

12. Projektionsanordnung (100) nach Anspruch 10, bei welcher die Reflexionsschicht (9) durch ein Bedampfungsverfahren, bevorzugt das CVD- oder PVD-Verfahren, auf die Außenscheibe (2), den opaken Hintergrund, die Innenscheibe (3) und/oder eine Folie aufgebracht wird.

13. Projektionsanordnung (100) nach einem der Ansprüche 1 bis 12, wobei eine hochbrechende Beschichtung (14) mit einem Brechungsindex von mindestens 1,7 mindestens in einem Bereich der Innenseite (IV) der Innenscheibe (3) angeordnet ist, welcher in vollständiger Überlappung mit der Reflexionsschicht (9) ist, so dass das p-polarisierte Licht, welches von der Bildanzeigevorrichtung auf die Reflexionsschicht projiziert wird, durch die hochbrechende Beschichtung verläuft, bevor es auf der Reflexionsschicht auftrifft, wobei der Brechungsindex mittels Ellipsometrie bestimmbar ist, und bezogen auf eine Wellenlänge von 550 nm angegeben ist.

14. Verfahren zur Herstellung einer Projektionsanordnung (100) nach einem der Ansprüche 1 bis 13, umfassend:
(a) das Anordnen einer transparenten Außenscheibe (2), einer thermoplastischen Zwischenschicht (4), einer Reflexionsschicht (9) und einer transparenten Innenscheibe (3) zu einem Schichtstapel,
wobei die Außenscheibe (2) eine von der thermoplastischen Zwischenschicht (4) abgewandte Außenseite (I) und eine der thermoplastischen Zwischenschicht (4) zugewandte Innenseite (II) und die Innenscheibe (3) eine der thermoplastischen Zwischenschicht (4) zugewandte Außenseite (III) und eine von der thermoplastischen Zwischenschicht (4) abgewandte Innenseite (IV) aufweist,
wobei die Reflexionsschicht (9) zwischen der Außenscheibe (2) und der Innenscheibe (3) angeordnet wird und zum Reflektieren von p-polarisiertem Licht (10) geeignet ist,
wobei die Reflexionsschicht (9) selbst opak ist oder in Durchsicht durch den Schichtstapel ausgehend von der Innenseite (IV) der Innenscheibe (3) räumlich vor einem opaken Hintergrund angeordnet wird,
(b) die Laminierung des Schichtstapels zu einer Verbundscheibe (1),
(c) das Anordnen einer Bildanzeigevorrichtung (8), welche auf die Reflexionsschicht (9) gerichtet und diese durch die Innenscheibe (3) mit einem p-polarisiertem Licht (10) bestrahlt, wobei die Reflexionsschicht (9) das p-polarisierte Licht (10) reflektiert.

15. Verwendung einer Projektionsanordnung (100) nach einem der Ansprüche 1 bis 13 in Fahrzeugen für den Verkehr auf dem Lande, in der Luft oder zu Wasser, wobei die Verbundscheibe (1) bevorzugt eine Windschutzscheibe ist.

## Claims

1. Projection arrangement (100), comprising
- a composite pane (1) comprising a transparent outer pane (2), a thermoplastic intermediate layer (4), a reflective layer (9) and a transparent inner pane (3),
wherein the outer pane (2) has an outer side (I) facing away from the thermoplastic intermediate layer (4) and an inner side (II) facing the thermoplastic intermediate layer (4), and the inner pane (3) has an outer side (III) facing the thermoplastic intermediate layer (4) and an inner side (IV) facing away from the thermoplastic intermediate layer (4),
wherein the reflective layer (9) is arranged between the outer pane (2) and the inner pane (3) and is suitable for reflecting p-polarised light (10),
wherein the reflective layer (9) is itself opaque or, when viewed through the composite pane (1) from the inner side (IV) of the inner pane (3), is spatially arranged in front of an opaque background,
- an image display device (8) which is directed toward the reflective layer (9) and illuminates it through the inner pane (3) with a p-polarised light (10),
wherein the reflective layer (9) reflects the p-polarised light (10), wherein 'transparent' means that the total transmission of the composite pane complies with the legal requirements for windshields according to ECE-R43 and wherein 'opaque' means a light transmission of less than 10%.

2. Projection arrangement (100) according to claim 1, in which the reflective layer (9) reflects 30% or more, preferably 50% or more, and in particular 70% or more, of the p-polarised light (10) impinging on the reflective layer (9).

3. Projection arrangement (100) according to any of claims 1 or 2, wherein the image display device (8) is a display, such as an LCD display, LED display, OLED display, electroluminescent display, preferably an LCD display.

4. Projection arrangement (100) according to any of claims 1 to 3, wherein the opaque background is formed as at least one masking strip (5) and is arranged in an edge region of the outer pane (2).

5. Projection arrangement (100) according to claim 4, in which the at least one masking strip (5) is arranged on the inner side (II) of the outer pane (2).

6. Projection arrangement (100) according to claim 4 or 5, in which the reflective layer (9) is arranged on the outer side (III) of the inner pane (3).

7. Projection arrangement (100) according to claim 5, in which the reflective layer (9) is arranged on the inner side (II) of the outer pane (2) on the masking strip (5).

8. Projection arrangement (100) according to any of claims 4 to 7, wherein the at least one masking strip (5) is formed in a circumferential manner in the edge region of the composite pane (1) and, in particular in a section (11') which is in overlap with the reflective layer (9), has a greater width than in sections (11") different therefrom.

9. Projection arrangement (100) according to any of claims 1 to 5, in which the reflective layer (9) is a coated or uncoated film and is arranged within the thermoplastic intermediate layer (4).

10. Projection arrangement (100) according to any of claims 1 to 9, in which the reflective layer (9) contains at least one metal, preferably silver.

11. Projection arrangement (100) according to any of claims 1 to 8, in which the reflective layer (9) consists of a metal-free reflective film.

12. Projection arrangement (100) according to claim 10, in which the reflective layer (9) is applied to the outer pane (2), the opaque background, the inner pane (3) and/or a film by a vapour deposition method, preferably the CVD or PVD method.

13. Projection arrangement (100) according to any of claims 1 to 12, wherein a high-refractive-index coating (14) with a refractive index of at least 1.7 is arranged at least in a region of the inner side (IV) of the inner pane (3) which region is in complete overlap with the reflective layer (9), so that the p-polarised light which is projected from the image display device onto the reflective layer passes through the high-refractive-index coating before it strikes the reflective layer, wherein the refractive index can be determined by ellipsometry and is specified with reference to a wavelength of 550 nm.

14. Method for producing a projection arrangement (100) according to any of claims 1 to 13, comprising:
(a) arranging a transparent outer pane (2), a thermoplastic intermediate layer (4), a reflective layer (9) and a transparent inner pane (3) to form a layer stack,
wherein the outer pane (2) has an outer side (I) facing away from the thermoplastic intermediate layer (4) and an inner side (II) facing the thermoplastic intermediate layer (4), and the inner pane (3) has an outer side (III) facing the thermoplastic intermediate layer (4) and an inner side (IV) facing away from the thermoplastic intermediate layer (4),
wherein the reflective layer (9) is arranged between the outer pane (2) and the inner pane (3) and is suitable for reflecting p-polarised light (10),
wherein the reflective layer (9) is itself opaque or, when viewed through the layer stack from the inner side (IV) of the inner pane (3), is spatially arranged in front of an opaque background,
(b) laminating the layer stack to form a composite pane (1),
(c) arranging an image display device (8) which is directed toward the reflective layer (9) and illuminates it through the inner pane (3) with a p-polarised light (10), wherein the reflective layer (9) reflects the p-polarised light (10).

15. Use of a projection arrangement (100) according to any of claims 1 to 13 in vehicles for transportation on land, in the air, or on water, wherein the composite pane (1) is preferably a windscreen.

## Revendications

1. Agencement de projection (100) comprenant
- un vitrage feuilleté (1), lequel comprend une vitre externe (2) transparente, une couche intermédiaire thermoplastique (4), une couche réfléchissante (9) et une vitre interne (3) transparente,
dans lequel la vitre externe (2) présente un côté externe (I) détourné de la couche intermédiaire thermoplastique (4) et un côté interne (II) tourné vers la couche intermédiaire thermoplastique (4) et la vitre interne (3) présente un côté externe (III) tourné vers la couche intermédiaire thermoplastique (4) et un côté interne (IV) détourné de la couche intermédiaire thermoplastique (4),
dans lequel la couche réfléchissante (9) est disposée entre la vitre externe (2) et la vitre interne (3) et est apte à réfléchir la lumière polarisée p (10),
dans lequel la couche réfléchissante (9) est elle-même opaque ou, vue à travers le vitrage feuilleté (1) depuis le côté interne (IV) de la vitre interne (3), est disposée devant un fond opaque dans l'espace,
- un dispositif d'affichage d'images (8), lequel est orienté vers la couche réfléchissante (9) et irradie celle-ci à travers la vitre interne (3) avec une lumière polarisée p (10),
dans lequel la couche réfléchissante (9) réfléchit la lumière polarisée p (10), dans lequel « transparent » signifie que la transmission totale du vitrage feuilleté est conforme aux dispositions légales applicables aux pare-brises selon la norme ECE-R43, et dans lequel « opaque » signifie une transmission lumineuse inférieure à 10 %.

2. Agencement de projection (100) selon la revendication 1, dans lequel la couche réfléchissante (9) réfléchit 30 % ou plus, de préférence 50 % ou plus et en particulier 70 % ou plus de la lumière polarisée p (10) incidente sur la couche réfléchissante (9).

3. Agencement de projection (100) selon l'une des revendications 1 ou 2, dans lequel le dispositif d'affichage d'images (8) est un écran, tel qu'un écran LCD, un écran DEL, un écran DELO, un écran électroluminescent, de préférence un écran LCD.

4. Agencement de projection (100) selon l'une des revendications 1 à 3, dans lequel le fond opaque est conçu comme au moins une bande de masquage (5) et est disposé dans une zone marginale de la vitre externe (2).

5. Agencement de projection (100) selon la revendication 4, dans lequel l'au moins une bande de masquage (5) est disposée sur le côté interne (II) de la vitre externe (2).

6. Agencement de projection (100) selon la revendication 4 ou 5, dans lequel la couche réfléchissante (9) est disposée sur le côté externe (III) de la vitre interne (3).

7. Agencement de projection (100) selon la revendication 5, dans lequel la couche réfléchissante (9) est disposée sur le côté interne (II) de la vitre externe (2) sur la bande de masquage (5).

8. Agencement de projection (100) selon l'une des revendications 4 à 7, dans lequel l'au moins une bande de masquage (5) est conçue en s'étendant sur la circonférence dans la zone marginale du vitrage feuilleté (1) et présente en particulier une largeur plus importante dans une section (11') qui est en recouvrement par rapport à la couche réfléchissante (9) que dans des sections (11") différentes de celle-ci.

9. Agencement de projection (100) selon l'une des revendications 1 à 5, dans lequel la couche réfléchissante (9) est un film revêtu ou non revêtu et est disposée à l'intérieur de la couche intermédiaire thermoplastique (4).

10. Agencement de projection (100) selon l'une des revendications 1 à 9, dans lequel la couche réfléchissante (9) contient au moins un métal, de préférence de l'argent.

11. Agencement de projection (100) selon l'une des revendications 1 à 8, dans lequel la couche réfléchissante (9) est constituée d'un film réfléchissant exempt de métal.

12. Agencement de projection (100) selon la revendication 10, dans lequel la couche réfléchissante (9) est déposée sur la vitre externe (2), le fond opaque, la vitre interne (3) et/ou un film par un procédé de vaporisation, de préférence par le procédé CVD ou PVD.

13. Agencement de projection (100) selon l'une des revendications 1 à 12, dans lequel un revêtement à haute réfraction (14) comportant un indice de réfraction d'au moins 1,7 est disposé au moins dans une zone du côté interne (IV) de la vitre interne (3), laquelle zone chevauche entièrement la couche réfléchissante (9), de sorte que la lumière polarisée p qui est projetée par le dispositif d'affichage d'images sur la couche réfléchissante s'étend à travers le revêtement à haute réfraction avant d'être incidente sur la couche réfléchissante, dans lequel l'indice de réfraction peut être déterminé par ellipsométrie, et est indiqué par rapport à une longueur d'onde de 550 nm.

14. Procédé pour la fabrication d'un agencement de projection (100) selon l'une des revendications 1 à 13, comprenant :
(a) l'agencement d'une vitre externe (2) transparente, d'une couche intermédiaire thermoplastique (4), d'une couche réfléchissante (9) et d'une vitre interne (3) transparente pour former un empilement de couches,
dans lequel la vitre externe (2) présente un côté externe (I) détourné de la couche intermédiaire thermoplastique (4) et un côté interne (II) tourné vers la couche intermédiaire thermoplastique (4) et la vitre interne (3) présente un côté externe (III) tourné vers la couche intermédiaire thermoplastique (4) et un côté interne (IV) détourné de la couche intermédiaire thermoplastique (4),
dans lequel la couche réfléchissante (9) est disposée entre la vitre externe (2) et la vitre interne (3) et est apte à réfléchir la lumière polarisée p (10),
dans lequel la couche réfléchissante (9) est elle-même opaque ou, vue à travers l'empilement de couches à partir du côté interne (IV) de la vitre interne (3), est disposée devant un fond opaque dans l'espace,
(b) le laminage de l'empilement de couches pour former un vitrage feuilleté (1),
(c) l'agencement d'un dispositif d'affichage d'images (8) qui est orienté vers la couche réfléchissante (9) et irradie celle-ci à travers la vitre interne (3) avec une lumière polarisée p (10), dans lequel la couche réfléchissante (9) réfléchit la lumière polarisée p (10).

15. Utilisation d'un agencement de projection (100) selon l'une des revendications 1 à 13 dans des véhicules pour la circulation terrestre, aérienne ou maritime, dans lequel le vitrage feuilleté (1) est de préférence un pare-brise.
